# EUROPEAN PATENT SPECIFICATION

(11) **EP 2 119 182 B1**
(45) Date of publication and mention of the grant of the patent: **03.11.2010**
(21) Application number: 07725113.0
(22) Date of filing: 11.05.2007
(51) Int. Cl.: H04L 29/06

(54) **Methods and arrangements for spread of applications**
Verfahren und Anordnungen zur Verteilung von Anwendungen
Procédés et agencements pour une extension d'applications

(30) Priority: 14.03.2007 US 686220
(43) Date of publication of application: 18.11.2009
(73) Proprietor: Sony Ericsson Mobile Communications AB, 221 88 Lund (SE)
(72) Inventor: BENGTSSON, Henrik, S-227 36 Lund (SE); SÅNGBERG, Troed, S-211 54 Malmö (SE); MONTÁN, Ola, S-232 53 Åkarp (SE)
(74) Representative: Hagström, Lena
(86) International application number: PCT/EP2007/004193
(87) International publication number: WO 2008/110188

(56) References cited:
- EP-A- 1 743 681
- WO-A-2004/105411
- WO-A-2006/075060

## Description

### TECHNICAL FIELD

The present invention relates generally to a method and an arrangement in a first communication device and a method and an arrangement in an application server. In particular it relates to spread of an application to a second communication device.

### DESCRIPTION OF RELATED ART

The telecom industry is slow in introducing new features and new applications in communication devices such as mobile phones. That is since it always requires standardization, and implementation, and interoperability (IOP) testing and role out in the operator networks. Today the only way to introduce a new feature requiring a new application is to first standardize the new feature and then include the new application in all new mobile phones. This results in the problem that mobile phones that are already on the market are excluded from the introduction of new features and applications.

One way of solving this is by using auto spreading, also referred to as quickershare. If a first phone contacts a second phone, with the purpose of e.g. chat, and if the technique of auto spreading is used, the first communication device will invite the second communication device, by using the e.g. an Short Message Service (SMS) bearer. This may be performed through a Java, or other, based client. If second phone already has the application, it will auto start, and the user of the first phone can chat with the user of the second phone. If the application does not exist in the second phone, the user of the second phone will be requested to download the application. This request may e.g. appear as a text and a link in the SMS.

The problem is that the user of the first phone will need to wait a while before the user of the first phone gets in contact with the user of the second phone, in the case where the application first needs to be downloaded and installed. The user of the first phone will continuously watch the display in the first phone, to see whether he/she gets in contact or not.

EP1 743 681 discloses a method in a first communication device, wherein a message is sent to a second communication device which message comprises a link to a server from where an application can be downloaded into the second device. The problem in this method is when the download of application fails by the second device. The first device then may try again and again to prompt the second device and other second devices to download the application without any success.

### SUMMARY

The object of the invention is to provide a mechanism for improving the procedure for a first communication device to send a message to a second device, the message comprising a link to an application server where the second device is requested to perform down load an application.

According to a first aspect of the invention, the object is achieved by a method in a first communications device as defined by independent claim 1.

According to a second aspect of the invention, the object is also achieved by a method in an application server as defined by independent claim 8.

According to a third aspect of the invention, the object is also achieved by an arrangement in a first communication device as defined by independent claim 14.

According to a fourth aspect of the invention, the object is also achieved by an arrangement in an application server as defined by independent claim 16.

Since the first device receives information from the application server whether or not the second device downloads the application and this is indicated in the first device, the user of the first device is accordingly informed and given knowledge about how the down load is proceeding in the second device. This implies the procedure for a first communication device to send a message to a second device, the message comprising a link to an application server where the second device is requested to perform a down load an application.

An advantage of the present invention is that the indication will much help the user of the first device. It informs the user, so that he/she can soon, within a few seconds expect whether the application within the second device is to be up and running or not.

Another advantage of the present invention is that the system can obtain knowledge about which type of devices that succeeds with download of the application and which type of devices that fails.

A further advantage is that the present invention is independent of operator.

### BRIEF DESCRIPTION OF THE DRAWINGS

- Figure 1: is a schematic block diagram illustrating a first device communicating with a second device according to the present invention.
- Figure 2: is a combined signaling scheme and flowchart illustrating an embodiment of the present invention.
- Figure 3: is a combined signaling scheme and flowchart illustrating another embodiment of the present invention.
- Figure 4: is a flowchart illustrating the present method in a first communication device.
- Figure 5: is a schematic block diagram illustrating an arrangement in a first communication device.
- Figure 6: is a flowchart illustrating the present method in an application server.
- Figure 7: is a schematic block diagram illustrating an arrangement in an application server.

### DETAILED DESCRIPTION OF THE INVENTION

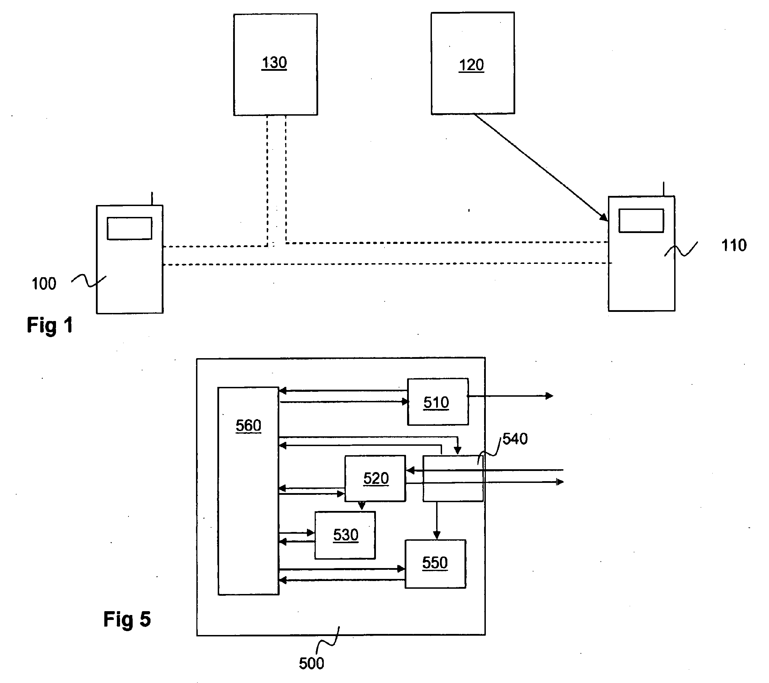

Figure 1 shows a first communication device 100, from now on called the first device 100, adapted to communicate with a second communication device 110, from now on called the second device 110. The first device 100 and second device 110 are comprised in a communication system, this may be any communication system such as e.g. a radio communication system using technologies such as e.g. Global System for Mobile communication (GSM) and Wideband Code Division Multiple Access (WCDMA), a Plain Old Telephone Service system (POTS), or the Internet. The first device 100 and second device 110 may be e.g. a portable device, a mobile phone, a Personal Digital Computer, a POTS device, a computer or any other communication device.

The first device 100 is capable of sending a message to the second device 110. The message may be any message sent via any messaging service such as SMS, email, Microsoft Network (MSN) Googletalk. In some embodiments, the first device 100 and second device 110 further comprises a respective telephone number or some other kind of address that make them capable of communicating via SMS or similar, using a SMS bearer or similar bearer that may be circuit switched or packet switched. SMS in this document also comprises Multimedia Messaging Service (MMS). For example, the first device 100 and second device 110 may comprise a Subscriber Identity Module (SIM) card or similar function such as Universal Mobile Telecommunications System SIM (USIM) or IP Multimedia Subsystem SIM (ISIM) comprising the telephone number or the other kind of address to the device.

The user of the first device 100 wishes to send a message with a link to an application to the user of the second device 110 via the messaging service. The application may be of any type that can be downloaded from e.g. an application server 120. The application is thus available on the application server 120 for being downloaded into devices such as e.g. the second device 110. The first device 100 may already comprise the application. In some embodiments the application server 120 is comprised in the first device 100, but the application server 120 may also be separated from the first device 100. The application server 120 is a software component that can be located on any device available in the same network as the communication devices. It can be located in the first phone, on a separate server on the Internet or on the same server as where the application is downloaded from.

The application can be written in any open environment such as in e.g. Java or UIQ, making it possible to install the application. The application may e.g. be such that it enables real time communication between the first device 100 and the second device 110, e.g. voice, pictures, video or any other communication.

The second device 110 supports download of applications such as e.g. Java or UIQ devices. JAVA is an object oriented programming language developed at Sun Microsystems. The Java language is used extensively on the World Wide Web (www). UIQ 3 is a software platform, pre-integrated and tested with the operating system Symbian OS v9, providing core technologies and services such as telephony and networking.

As mentioned above, the user of the first device 100 wishes to send a message with a link to an application to the second device 110 via the messaging service. The purpose of this is that the user of the first device 100 wants the user of the second device 100 to activate the link and download the application from the application server 120 into the second device 110. In some embodiments the user of the first device 100 wishes to share the application with the user of the second device 110 using an IP connection. E.g. to talk to the user of the second device 110, using an Internet Protocol (IP) telephony application, show a picture for the user of the second device 110 using a picture viewer application, run an instant messaging session etc. In order to make this work, the second device 110 requires comprising the same application. The first device 100 wishes to provide the second device 110 with the application if the second device 110 does not already comprise the application.

The first device 100 may comprise a public IP address or any other address that can be addressed by a network. In current telecom systems and on the internet, the number of IP addresses is limited. Therefore there are not enough addresses to provide public IP addresses to every user, and most users have private IP addresses. In the next version of IP, the IP v6 version, close to infinite numbers of IP addresses will exist, allowing for everyone to have public IP addresses.

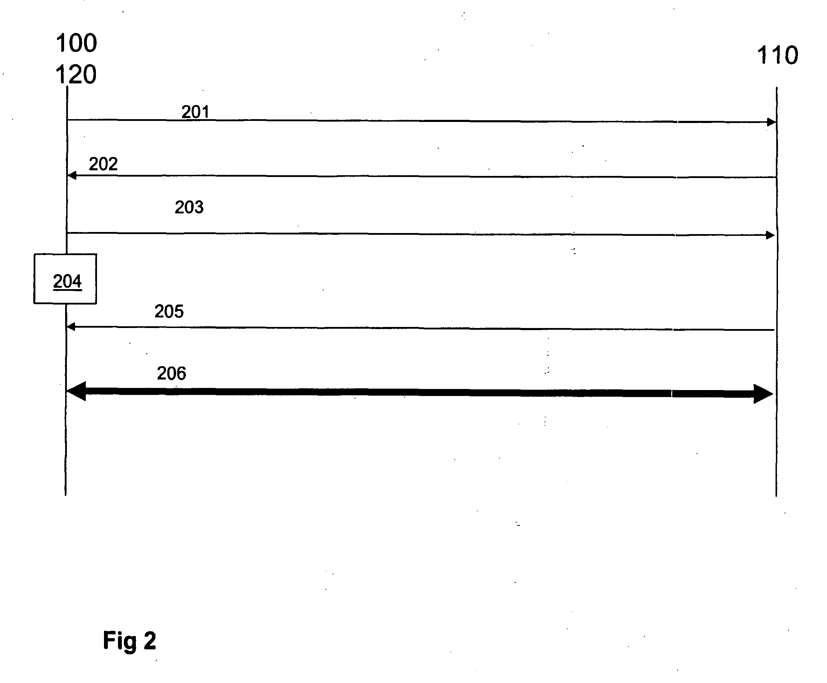

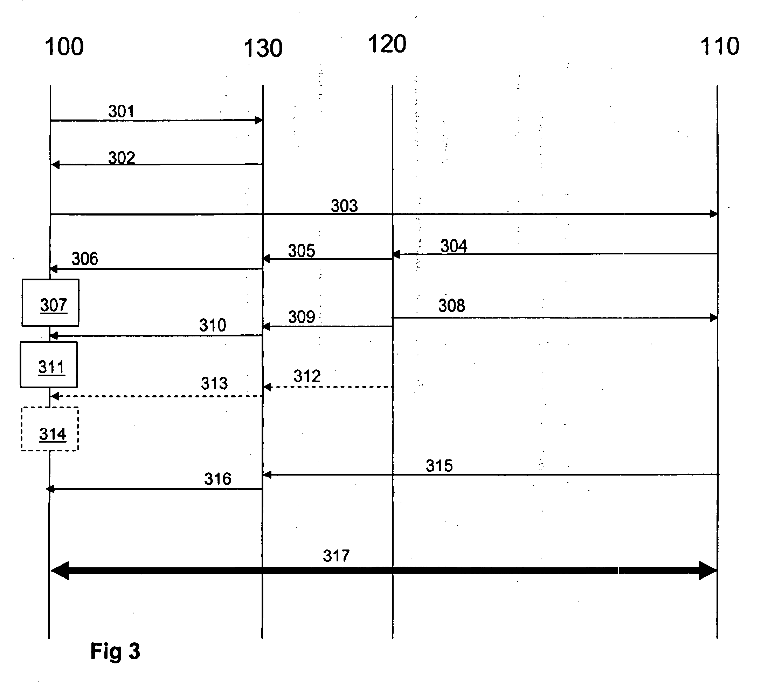

If the first device 100 does not comprises a public IP address, the consequence is that a user of the first device 100 can not be directly contacted by the second device 110. Instead the second device 110 contacts a messaging server 130, using an IP address of the messaging server 130. The messaging server 130 may be any server that forwards messages from one user device to another user device such as from the first device 100 to the second device 110. This may be email instant messages or any other type of communication. In some embodiments the_messaging server 130 completes the IP connection to the first device 100. How this is performed will be described later on. Therefore there is provided, some embodiments wherein the first device 100 has a public IP address and no messaging server is used as will be described below with reference to Figure 2, and some another embodiments wherein the first device 100 not has any public IP address and a messaging server130 is involved, which embodiment will be described further on with reference to Figure 3. The messaging server 130 may be a general server only connecting those devices without public IP numbers, but could also contain application specific functionality. The application in the first device 100 may know the IP address of the messaging server 130. The public IP address of the first device 100 will from now on be called the IP address of the first device 100. The IP address of the first device 100 represents an identity, identifying the first device 100, which identity is used by the second device 110 for initiating an IP connection between the first device 100 and the second device 110.

In some embodiments the_IP address of the messaging server 130 may be used by the first device 100 to set up an IP connection to the messaging server 130. The first device 100 may send a request to the messaging server 130, requesting a registration and an identity of the connection. I.e., the first device 100 who wishes to contact the second device 110 must register some identification of the wished connection in the messaging server 130. The identity may be sent by the first device 100 in an message to the second device 110. When the second device 110 contacts the messaging server 130 it informs the messaging server 130 about the identity. The messaging server 130 then knows to which existing connection the second device 110 shall be connected. The identity may e.g. be a 128 bit hash code or any other unique identifier of the connection.

Figure 2 is a combined signaling scheme and flowchart describing some embodiments of the present method. In these embodiments of the method, the first device 100 has a public IP address. The message service in this example mat preferably be SMS. The method comprises the following steps:
- 201.: The first device 100 sends a message to the second device 110. This method step 201 may be performed e.g. by, starting the application in the first device 100 and choosing the second device 110 in a phone book in the first device 100.
The message may comprise an identity for the second device 110 to use for initiating an IP connection between the first device 100 and the second device 110. In this embodiment when the first device has an IP address, the identity is the public IP address of the first device 100.
The message further comprises a link to an application server 120, in which application server 120 the application can be downloaded into the second device 110. The application server 120 is comprised in the first device 100 and the link to the application server 120 is the IP address of the first device 100.
The message may further comprise an invitation text to be displayed in the second device 110 if the second device 110 not already comprises the application. The invitation text is a human readable text inviting the user of the second device 110 to activate the link if he/she wishes to download the application, such as e.g. "the user of the first device wants to send you a picture. Please click on the link below to make that possible http://xxx.wv.zzz.
- 202.: The second device 110 receives the message. The invitation text mentioned above may be displayed in the second device 110 if comprised in the message. The link is comprised in the message is activated in the second device 110, if the user of the second device 110 chooses to do so. When activating the link, the first device 100 comprising the application server 120 is contacted by using the IP address of the first device 100.
- 203.: The second device 110 starts to download the application. It may take some while until this step is completed. E.g. for a signed Java application, the steps could be that the user of the second device 110 first clicks on the supplied link and sees a description of the application. The user then clicks on a second displayed link to download the application. When the application is downloaded it will be installed, and after having been installed the application needs to start. These steps could be automatic or manual depending on the application environment in the device. This step will take some time, which may be felt as a long time to wait in uncertainly whether the download of the application has started or failed by the user of the first device 100.
- 204.: When the second device 110 has activated the link received in the message, and started to down load the application, the application server 120 informs the first device 100 that the second device has started to download the application. This is performed to overcome the problem of state of uncertainly of the user of the first device 100. A more detailed description how to detect and use information about the second device 110 contacting the application server 120 and downloading the application will be described below. If the second device 110 fails to download the application, the first device is informed about that. The information is displayed on a display in the first device 100. This is to inform the user of the first device 100 which is very advantageous, since the user of the first device 100 is in a state of uncertainty since he/she does not know whether the second device 110 is turned off, fails to contact the application server 120 or has started to download the application which might take some while. The risk of this state of uncertainty is that the user of the first device 100 terminates his intention to share the application with the second device 110 if the down load takes time because he/she thinks that the second device 110 e.g. fails to download or is turned off. The displayed information informs the user of the first device 100 whether he/she can soon, such as e.g. within a few seconds, expect the connection between the first device 100 and the second device 110 to be up and running using the shared application or not. The information may be displayed through e.g. changing the colour of an icon in the display such as an icon representing the user of the second device 110. Another example of displaying the information is to display signs moving in any direction such as such as e.g. some dots moving from left to right.
- 205.: The second device 110 then initiates an IP connection between the first device 100 and the second device 110, using the identity, which in this embodiment is represented by the IP address of the first device 100. This may be performed by the application downloaded into the second device 110.
- 206.: An IP connection is started between the first device 100 and the second device 110 and the first device 100 can start communicate with the second device 110, using the shared application.

Figure 3 is a combined signaling scheme and flowchart that shows some embodiments wherein the first device 100 does not have a public IP address. In this case the first device 100 must contact the second device 110 via the messaging server 130. The application in first device 100 knows the public IP address to the messaging server 130. The message service in this example may also preferably be SMS. The method comprises the following steps:
- 301.: The first device 100 connects to of the messaging server 130 by means of the known IP address, for initiating an IP connection between the first device 100 and the messaging server 130. This step may be performed e.g. by, starting the application in the first device 100 and choosing the second device 110 in a phone book in the first device 100, which application then will initiate the connection to the messaging server 130. The initiating of the connection may be performed by the application.
The first device 100 obtains an identity identifying the connection between first device 100 and the messaging server 130, and the connection and its identity is registered in the messaging server 130. The first device 100 may as an alternative create the identity identifying the connection between first device 100 and the messaging server 130, and sends the identity and a request to the sever 120 to register this connection and its identity in the messaging server 130.
- 302.: The first device 100 receives a response from the messaging server 130, the response comprising the requested identity identifying the connection between the first device 100 and the messaging server 130 if it was requested.
The response may further comprise an invitation text formulated by the messaging server 130 which will be sent by the first device 100 to the second device 110 in the next step.
- 303.: The first device 100 sends a message to the second device 110.
The message comprises an identity for the second device 110 to use for initiating an IP connection between the first device and the second device. The identity in this embodiment is represented by the identity identifying the existing connection between first device 100 and the messaging server 130 obtained from the messaging server 130 in step 302.
The message further comprises the link to the application server 120, from which the application can be downloaded into the second device 110.
The message may further comprise the invitation text to be displayed in the second device 110.
- 304.: The second device receives the message. The invitation text is displayed in the second device 110 if comprised in the message. The link comprised in the message is activated by the user of the second device 110, if the user of the second device 120 chooses to do so, and the second device 110 contacts the application server 120 with intent to download the application, by using the link comprised in the message. When the second device 110 contacts the application server, it also encloses the identity identifying the connection between first device 100 and the messaging server 130 received in the message.

- 305.: The application server 120 now know by identify the identity that the first device 100 wishes to share an application with the second device 110 and use the connection between first device 100 and the messaging server 130 and that the second device 110 wishes to download the application from the application server. The application server 120 may then send information to the messaging server 130 that the second device 110 has contacted the application server 120 with intent to download the application. A more detailed description how to detect and use information about the second device 110 contacting the application server 120 and downloading the application will be described below.
- 306.: If the information that the second device 110 has contacted the application server 120 with intent to download the application is sent to the messaging server 130, the messaging server 130 forwards this information to the first device 100, e.g. by using the connection set up in step 302.
- 307.: If the information that the second device 110 has contacted the application server 120 with intent to download the application is sent to the messaging server 130, is received by the first device 100, the first device 100 displays the information e.g. in the display of the first device 100. The information is displayed to inform the user of the first device 100 that the second device 110 has now contacted the application server 120 in the same way and by the reasons being described under step 204.
- 308.: The second device 110 then starts to down load the application is then downloaded into the second device 110. It may take some while until this step is completed, as described under step 203.
- 309.: The application server 120 then sends information to the messaging server 130 that the second device 110 has started to download the application by means of the obtained knowledge described in step 305. A more detailed description how to detect and use information about the second device 110 contacting the application server 120 and downloading the application will be described below.
- 310.: The messaging server 130 receives the information that the second device 110 has started to download the application and forwards this information to the first device 110, e.g. by using the connection set up in step 302.
- 311.: The first device 100 displays the received information in the display of the first device 100. The information is displayed to inform the user of the first device 100 that the second device 110 has started to download the application. The information is displayed to inform the user of the first device 100 that the second device 110 has now started to down load the application in the same way and by the reasons being described under step 204.
- 312.: If the download to the second device 110 by some reason fails or if the second device 110 is an incompatible device, the application server 120 informs the messaging server 130 that the download failed. This information may be sent as soon as it is discovered, which may occur even before the second device 110 starts to down load, e.g. if the second device 110 is an incompatible device. In that case this information may be sent in step 305. A more detailed description how to detect and use information about the second device 110 contacting the application server 120 and downloading the application will be described below. This step is shown with a dashed line in Figure 3.
- 313.: If the messaging server 130 receives the information that the download failed, the information is forwarded by the messaging server 130 to the first device 100, e.g. by using the connection set up in step 302. This step is shown with a dashed line in Figure 3.
- 314.: If the information that the second device 110 failed to download the application is sent to the messaging server 130, is received by the first device 100, the first device 100 displays the information in the display of the first device. This step is shown with a dashed square in Figure 3. The information is displayed to inform the user of the first device 100 that the second device 110 failed to download the application, in the same way and by the reasons being described under step 204.
- 315.: The application downloaded in the second device 110 knows the IP address of the messaging server 130. The second device 110 connects to the first device 100 by first set up a connection to of the messaging server 130, using the known IP address. This may be performed by the application in the second device 110 connecting to the application in the first device 100.
The second device 110 provides the messaging server 130 with the identity identifying the existing connection between the first device 100 and the messaging server 130, which identity were comprised in the message. The messaging server 130 identifies the existing connection by means of the identity.
- 316.: When the messaging server 130 has identified the connection associated with the identity it sets up an IP connection between the first device 100 and the second device 110, by connecting the connection between the second device 110 and the messaging server 130 with the connection between the first device 100 and the messaging server 130.
- 317.: An IP connection is started between the first device 100 and the second device 110. The first device 100 can start communicate with the second device 110, using the shared application.

A more detailed description of examples of how to detect and use information about the second device 110 contacting the application server 120 and downloading the application will now be described.

Applications may in some embodiments be spread divided into in two files whereof the first file comprises information about e.g. supplier, and the second file comprises the actual application. When the second device 110 contacts the application server 120 in that case, a request is sent from the second device 110 to the application server 120 for the first part of the installation file of the application. The application server 120 then obtains information about the type of device that the second device is and which application platform to be used. This indicates that the second device 110 has activated the link and further if the second device 110 can be used for the application or not. This means that information may be sent to the first device 100 via the messaging server 130 that the second device has activated the download of the application. If the second device 110 is an incompatible device, that information may be sent to the first device 100 which may be performed in step 305 and 306 in Figure 3.

When accessing the second file of installation of the application it indicates that the first installation file was OK, and the second device 110 has continued with the installation. Accessing the second installation file is an indication that the second device 110 has started to download the application and information about this may be sent in step 309 and 310 in Figure 3. If this step not occurs it may indicate that the second device has an incompatible receiving platform. This information may be sent in step 305 and 306 in Figure 3.

In some embodiments, the file for installation of the application is only represented by one file, which file comprises information about e.g. supplier, and the application. When the second device 110 contacts the application server 120 in that case, a request is sent from the second device 110 to the application server 120 for the installation file of the application. The application server then obtains the information about the type of device that the second device is and which application platform to be used. This indicates that the second device 110 has activated the link and further if the second device 110 can be used for the application or not. This means that information may be sent to the first device 100 via the messaging server 130 that the second device has started to download the application if the second device 110 is compatible. If the second device is not compatible this information may be sent to the first device 100. This information may be sent in step 305 and 306 in Figure 3.

When the second device 110 has downloaded and installed the application, for example through standard means possible in the chosen application platform like e.g. Java Mobile Information Device Profile 2 (Java MIDP2), the second device 110 may inform the application server 130 that the application is installed. If the application server 120 not obtains this information within a predetermined time limit this may indicate incompatible receiver platform. In that case the application server 120 may send this information to the first device 100 in step 312 and 313.

If the application server 120 observes that the activation of the link is repeated, this may indicate that something went wrong. This information is sent to the first device 100 in step 305 and 306 or 309 and 310. This information may be displayed in the first device 100 with a text such as e.g. "The receiver has tried to install the application and failed three times", in step 307 or 311. In this case this information is stored in the application server to use to predict if a download and installation is possible for another device with the same platform as the second device 110 when the application server 120 has obtained information about the type of device the other device is.

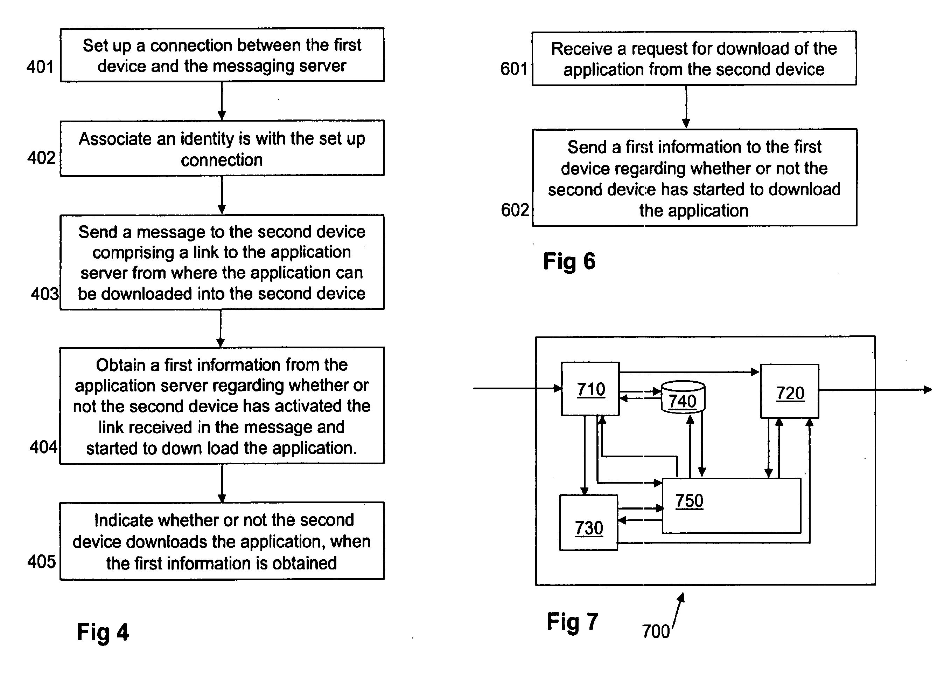

Figure 4 is a flowchart describing the present method in the first device 100.
- 401.: In some embodiments a connection is first set up between the first device 100 and the messaging server 130.
- 402.: In the embodiments where a connection is set up between the first device 100 and the messaging server 130, an identity is associated with the set up connection between the first device 100 and the messaging server 130;
- 403.: A message is sent to the second device 110. The message comprises a link to the application server 120 from where the application can be downloaded into the second device 110. In the embodiments where an identity is associated with a set up connection between the first device and the messaging server, this identity is comprised in the message.
- 404.: A first information is obtained from the application server 120. The first information tells whether or not the second device 110 has activated the link received in the message and started to down load the application. The obtained first information may be received from the application server via a messaging server. The messaging server may be contacted by the application server to forward the first information from the application server to the first device. In some embodiments a second information about the type of device that the second device is, and/or which application platform that is available in the second device 110 to be used for the application when downloaded into the second device 110 may be received by the application server 120 in an application download request from the second device 110. In these embodiments a third information is obtained from the application server 120. The third information is comprised in the first information and tells that the second device 110 cannot be used for the application, when that was estimated in the application server 120, based on the received second information. In some embodiments a fourth information is obtained from the application server 120, said fourth information is comprised in the first information and tells that the download of the application into the second device 110 failed if no message of successful download was obtained from the second device 110 to the application server 120 within a predetermined time limit.
A fifth information is obtained from the application server 120, said fifth information is comprised in the first information and tells that the second device 110 has tried to install the application and failed a number of times, when the application server 120 has received a plural of requests for download from the second device 110, which indicates an unsuccessful download of the application.
- 405. in: The first device 100 then indicates whether or not the second device downloads the application when the first information is obtained. In this way the user of the first device 100 is informed whether or not the user of the second device has started to download the application. The information may be indicated by e.g. changing the appearance of an icon in a display in the first device such as e.g. displaying signs moving from left to right or from right to left in a display in the first device. This is advantageous since the user of the first device 100 has an interest knowing whether or not the user of the second device 110 installs the application in the second device 110.
In the embodiments where the third information is obtained, the step of indicating is performed by indicating that the second device 110 cannot be used for the application.
In the embodiments where the fourth information is obtained, the step of indicating is performed by indicating that the download of the application into the second device 110 failed.
The step of indicating is performed by indicating that the second device 110 has tried to install the application and failed a number of times This is advantageous since the user of the first device 100 has an interest in knowing whether the download into the second device 110 does not work instead of just waiting and believe that the download might take some time.

To perform the method steps for sending a message with a link to an application to the user of the second device 110 the first device 100 comprises an arrangement 400 depicted in Figure 5. The first device arrangement may be comprised in a portable electronic device or a mobile phone.

The first device arrangement 500 comprises a transmitter 510 adapted to send a message to a second device 110. The message comprises a link to the application server 120 from where the application can be downloaded into the second device 110.

The first device arrangement 500 further comprises an information obtaining unit 520 adapted to obtain a first information from the application server 120 whether or not the second device 110 has activated the link received in the message, and started to down load the application: The first information tells whether or not the second device 110 has started to download the application.

In some embodiments the information obtaining unit 520 further is adapted to obtain the first information from the application server via a messaging server, which messaging server is adapted to be contacted by the application server to forward the first information from the application server to the first device.

In some embodiments a second information about the type of device that the second device 110 is, and/or which application platform is available in the second device 110 to be used for the application when downloaded into the second device 110, is adapted to be received by the application server 120 in an application download request from the second device 110. In that case the information obtaining unit 520 may further be adapted to obtain a third information, comprised in the first information from the application server 120, said third information telling that the second device 110 cannot be used for the application, when that was estimated in the application server 120 based on the received second information.

In some embodiments the information obtaining unit 520 further is adapted to obtain a fourth information, comprised in the first information from the application server 120, the fourth information telling that the download of the application into the second device 110 failed, if no message of successful download was obtained from the second device 110 within a predetermined time limit.

The information obtaining unit 520 further is adapted to obtain a fifth information, comprised in the first information from the application server 120, the fifth information telling that the second device 110 has tried to install the application and failed a number of times, when the application server 120 has received a plural of requests for download from the second device, which indicates an unsuccessful download of the application.

The first device arrangement 500 further comprises an indication unit 530 adapted to indicate whether or not the second device 110 downloads the application when the first information is obtained.

In some embodiments the indication unit 530 further is adapted to indicate that the second device 100 cannot be used for the application when the third information is obtained by the information obtaining unit 520.

In some embodiments the indication unit 530 further is adapted to indicate that the download of the application into the second device 110 failed when the fourth information is obtained by the information obtaining unit 520.

The indication unit 530 further is adapted to indicate that the second device 110 has tried to install the application and failed a number of times when the fifth information is obtained by the information obtaining unit 520.

In some embodiments the indication unit 530 further is adapted to change the appearance of an icon in a display in the first device 100 to indicate that the second device 110 downloads the application. In some embodiments the indication unit 530 further is adapted to displaying signs moving from left to right or from right to left in a display in the:first device 100.

The first device arrangement 500 may further comprise a connection point 540 adapted to set up a connection between the first device 100 and the messaging server 130.

The first device arrangement 500 may further comprise an identity association unit 550 adapted to associate the set up connection between the first device 100 and the messaging server 130 with an identity.

The transmitter 510 may further be adapted to comprise the identity in the message to be sent to the second device 110.

Figure 6 is a flowchart describing the present method in the application server 120. The application server 120 provides the application to be downloaded into the second device. The application server 120 is comprised in the first device.
- 601.: The application server 120 receives a request for download of the application from the second device 110. This happens when the second device 110 has received a message from a first device 100, which message comprises the link to the application server 120 for downloading the application, and when the link in the message is activated in the second device 110.
In some embodiments an identity is also received from the second device 110. This may happen when a connection between the first device 100 and the messaging server 130 is set up and associated with the identity, which identity was comprised in the message received by the second device 110 from the first device 100.
- 602.: When the request for download is received the, a first information is sent to the first device 100. The first information tells whether or not the second device 110 has started to download the application.
In some embodiments the request for download of the application comprises a second information about the type of device that the second device is and/or which application platform is available in the second device to be used for the application when downloaded. In that case it may be estimated if the second device can be used for the application or not, based on the second information. It may then be comprised in the first information, a third information. The third information telling that the second device cannot be used for the application, if that was estimated. In some embodiments a fourth information may be comprised in the first information, which fourth information tells that the download of the application into the second device failed if no message of successful download was obtained from the second device within a predetermined time limit.
A fifth information is comprised in the first information, said fifth information telling that the second device has tried to install the application and failed a number of times, when a plural of requests for download is received from the second device, which indicates an unsuccessful download of the application. The fifth information is stored together with the type of application platform of the second device to use to predict if a download and installation is possible for another device with the same platform as the second device.
In some embodiments the first information is sent to the messaging server 130. In that case the identity is used to identify the messaging server 130. The messaging server 130 is requested to forward the first information to the first device 110.

To perform the method steps in the application server 110, the application server 120 comprises an arrangement 700 depicted in Figure 7. The application server 120 is adapted to provide an application to be downloaded into the second device 110. The application server 120 is comprised in the first device 100.

The application server arrangement 700 comprises a receiver 710 adapted to receive a request for download of the application from the second device 110, when the second device 110 has received a message from a first device 100, the message comprising a link to the application server 120 for downloading the application, and when the link in the message is activated in the second device 110.

In some embodiments the receiver 710 further is adapted to receive an identity from the second device 110. The identity is associated with a set up connection between the first device 100 and the messaging server 130, which identity was comprised in the message received by the second device 110 from the first device 120.

In some embodiments the request for download of the application comprises a second information about the type of device that the second device 110 is and/or which application platform is available in the second device 110 to be used for the application when downloaded.

The application server arrangement 700 further comprises a sending unit 720 adapted to send a first information to the first device 100 when the request for download is received, said first information telling whether or not the second device 110 has started to download the application.

The sending unit 720 may further be adapted send the first information to he messaging server 130 and request the messaging server 130 to forward the first information to the first device 110.

The sending unit 720 may further be adapted to use the identity to identify the messaging server 130 for sending the first information to the messaging server 130.

The sending unit 720 may further be adapted to send a fourth information comprised in the first information, to the first device 100, said fourth information telling that the download of the application into the second device 110 failed if the receiver not has received any message of successful download was obtained from the second device 110 within a predetermined time limit.

The sending unit 720 further is adapted to send a fifth information comprised in the first information, to the first device 100, said fifth information telling that the second device 110 has tried to install the application and failed a number of times, when a plural of requests for download is received from the second device 110, which indicates an unsuccessful download of the application.

In the case the application server arrangement further may comprise an estimation unit 730 adapted to estimate if the second device 110 can be used for the application or not, based on the second information if received in the request for download of the application.

In that case the sending unit 720 further is adapted to send a third information comprised in the first information, to the first device 100, said third information telling the second device 110 cannot be used for the application, if that was estimated in the estimating unit 730.

The application server arrangement 700 further comprises a database 740 adapted to store the fifth information together with the type of application platform of the second device 110. The database 740 is used to predict if a download and installation is possible for another device with the same platform as the second device 120.

The present method can be implemented through one or more processors, such as a processor 560 in the first device 100 depicted in Figure 5, and such as a processor 750 in the application server 120 depicted in Figure 7, together with computer program code for performing the functions of the invention. The program code mentioned above may also be provided as a computer program product, for instance in the form of a data carrier carrying computer program code for performing the present method when being loaded into the first device 100 and/or the application server 120. One such carrier may be in the form of a CD ROM disc. It is however feasible with other data carriers such as a memory stick. The computer program code can furthermore be provided as pure program code on a server and downloaded to the first device 100 and/or the application server 120 remotely.

When using the word "comprise" or "comprising" it shall be interpreted as nonlimiting, i.e. meaning "consist at least of".

The present invention is not limited to the above-describe preferred embodiments. Various alternatives, modifications and equivalents may be used. Therefore, the above embodiments should not be taken as limiting the scope of the invention, which is defined by the appending claims.

## Claims

1. Method in a first communications device (100), the method comprising the steps of:
*sending* (403) a message to a second communications device (110) , the message comprising a link to an application server (120) from where an application can be downloaded into the second communications device (110);
*obtaining* (404) a first information from the application server (120) whether or not the second communications device (110) has activated the link received in the message, and started to down load the application,
**characterized in that**
the first communications device (100) comprises the application server (120), and **in that** the first information further comprises a fifth information telling that the second communications device (110) has tried to install the application and failed a number of times, when the application server (120) has received a plural of requests for download from the second communications device (110), which indicates an unsuccessful download of the application,
*indicating* (405) that the second communications device (110) has tried to install the application and failed a number of times when the fifth information is obtained
the application server (120) *storing* the fifth information together with the type of application platform of the second communications device (110) to use to predict if a download and installation is possible for another device with the same platform as the second communications device (110).

2. Method according to claim 1, wherein the step of indication is performed by *changing* the appearance of an icon in a display in the first communications device (100).

3. Method according to any of the claims 1-2, wherein the first communications device (100) comprises a display, and wherein the step of indication is performed by *displaying* signs moving from left to right or from right to left in a display in the first communications device (100).

4. Method according to any of the claims 1-3, wherein the obtained first information is received from the application server (120) via a messaging server, which messaging server is contacted by the application server (120) to forward the first information from the application server (120) to the first communications device (100).

5. Method according to any of the claims 1-4, comprising the further step of:
*setting up* (401) a connection between the first communications device (100) and the messaging server;
*associating* (402) the set up connection between the first communications device (100) and the messaging server with an identity; and
wherein the identity is comprised in the message sent in the step of sending a message to a second communications device (110).

6. Method according to any of the claims 1-5, wherein a second information about the type of device that the second communications device (110) is, and/or which application platform is available in the second communications device (110) to be used for the application when downloaded into the second communications device (110), is received by the application server (120) in an application download request from the second communications device (110), the method comprising the further step of:
*obtaining* (404) a third information from the application server (120), said third information telling that the second communications device (110) cannot be used for the application, when that was estimated in the application server (120) based on the received second information, the third information being comprised in the first information, and
wherein the step of indicating is performed by *indicating* that the second communications device (110) cannot be used for the application when the third information is obtained.

7. Method according to any of the claims 1-6, comprising the further step of:
*obtaining* (404) a fourth information from the application server (120), said fourth information telling that the download of the application into the second communications device (110) failed if no message of successful download was obtained from the second communications device (110) to the application server (120) within a predetermined time limit the fourth information being comprised in the first information; and
wherein the step of indicating is performed by *indicating* that the download of the application into the second communications device (110) failed when the fourth information is obtained.

8. Method in an application server (120), which application server (120) provides an application to be downloaded into a second communications device, the method comprising the step:
*receiving* (601) a request for download of the application from the second communications device (110), when the second communications device (110) has received a message from a first communications device (100), the message comprising a link to the application server (120) for downloading the application, and when the link in the message is activated in the second communications device (110);
*sending* (602) a first information to the first communications device (100) when the request for download is received, said first information telling whether or not the second communications device (110) has started to download the application,
**characterized by** the further step of:
*comprising* (602) in the first information, a fifth information to the first communications device (100), said fifth information telling that the second communications device (110) has tried to install the application and failed a number of times, when the application server (120) has received a plural of requests for download from the second communications device (110), which indicates an unsuccessful download of the application,
*storing* (602) the fifth information together with the type of application platform of the second communications device (110) to use to predict if a download and installation is possible for another device with the same platform as the second communications device (110).

9. Method according to claim 8, wherein the step of sending the first information is performed by the step of:
*sending* the first information to a messaging server; and
*requesting* the messaging server to forward the first information to the first communications device (100).

10. Method according to any of the claims 8-9, wherein a connection between the first communications device (100) and the messaging server is set up and associated with an identity, which identity was comprised in the message received by the second communications device (110) from the first communications device (100), comprising the further step of:
*receiving* (601) the identity from the second communications device (110);
*using* (602) the identity to identify the messaging server for the step of sending the first information to a messaging server.

11. Method according to any of the claims 8-10, wherein the request for download of the application comprises a second information about the type of device that the second communications device (110) is and/or which application platform is available in the second communications device (110) to be used for the application when downloaded, the method comprises the further step of:
*estimating* (602) if the second communications device (110) can be used for the application or not, based on the second information; and
*comprising* (602) in the first information, a third information to the first communications device (100), said third information telling the second communications device (110) cannot be used for the application, if that was estimated in the step of estimating.

12. Method according to any of the claims 8-11, comprising the further step of:
*comprising* (602) in the first information, a fourth information to the first communications device (100), said fourth information telling that the download of the application into the second communications device (110) failed if no message of successful download was obtained from the second communications device (110) within a predetermined time limit.

13. Method according to any of the claims 8-12, wherein the application server (120) is comprised in the first communications device (100).

14. An arrangement (500) in a first communications device (100), the first communications device arrangement (500) comprising :
a transmitter (510) adapted to send a message to a second communications device (110), the message comprising a link to an application server (120) from where an application can be downloaded into the second communications device (110);
an information obtaining unit (520) adapted to obtain a first information from the application server (120) whether or not the second communications device (110) has activated the link received in the message, and started to down load the application,
**characterized in that**
the first communications device arrangement (500) further comprises the application server (120),
the information obtaining unit (520) further is adapted to obtain a fifth information, comprised in the first information from the application server (120), said fifth information telling that the second communications device (110) has tried to install the application and failed a number of times, when the application server (120) has received a plural of requests for download from the second communications device (110), which indicates an unsuccessful download of the application,
the first communications device arrangement (500) further comprising an indication unit (530) adapted to indicate that the second communications device (110) has tried to install the application and failed a number of times when the fifth information is obtained by the information obtaining unit (520).
wherein the application server (120) further comprises a database adapted to store the fifth information together with the type of application platform of the second communications device (110) to use to predict if a download and installation is possible for another device with the same platform as the second communications device (110).

15. A mobile phone comprising the first communications device arrangement (500) according to claim 14.

16. An arrangement (700) in an application server (120), which application server (120) is adapted to provide an application to be downloaded into a second communications device, the application server arrangement (700) comprising:
a receiver (710) adapted to receive a request for download of the application from the second communications device (110), when the second communications device (110) has received a message from a first communications device (100), the message comprising a link to the application server (120) for downloading the application, and when the link in the message is activated in the second communications device (110);
a sending unit (720) adapted to send a first information to the first communications device (100) when the request for download is received, said first information telling whether or not the second communications device (110) has started to download the application,
**characterized in that**
the sending unit (720) further is adapted to send a fifth information comprised in the first information, to the first communications device (100), said fifth information telling that the second communications device (110) has tried to install the application and failed a number of times, when a plural of requests for download is received from the second communications device (110), which indicates an unsuccessful download of the application,
wherein the application server arrangement (700) further comprises a database (740) adapted to store the fifth information together with the type of application platform of the second communications device (110) to use to predict if a download and installation is possible for another device with the same platform as the second communications device (110).

17. Application server (120) arrangement according to claim 16 wherein the application server (120) is comprised in the first communications device (100).

## Patentansprüche

1. Verfahren in einem ersten Kommunikationsgerät (100), das Verfahren die Schritte umfassend:
Senden (403) einer Nachricht zu einem zweiten Kommunikationsgerät (110), wobei die Nachricht einen Link zu einem Anwendungsserver (120) umfasst, von welchem eine Anwendung in das zweite Kommunikationsgerät (110) heruntergeladen werden kann;
Erlangen (404) einer ersten Information von dem Anwendungsserver (120), ob, oder ob nicht, das zweite Kommunikationsgerät (110) den Link aktiviert hat, der in der Nachricht empfangen wurde, und begonnen hat die Anwendung herunterzuladen; **dadurch gekennzeichnet, dass**
das erste Kommunikationsgerät (100) den Anwendungsserver (120) umfasst, und **dadurch**, dass die erste Information ferner eine fünfte Information umfasst, die mitteilt, dass das zweite Kommunikationsgerät (110) versucht hat die Anwendung zu installieren und eine Anzahl von Malen fehlgeschlagen ist, wenn der Anwendungsserver (120) eine Vielzahl von Anfragen zum Herunterladen vom zweiten Kommunikationsgerät (110) empfangen hat, was ein erfolgloses Herunterladen der Anwendung anzeigt,
Anzeigen (405), dass das zweite Kommunikationsgerät (110) versucht hat die Anwendung zu installieren und eine Anzahl von Malen fehlgeschlagen ist, wenn die fünfte Information erlangt wird,
der Anwendungsserver (120) die fünfte Information zusammen mit dem Typ der Anwendungsplattform des zweiten Kommunikationsgeräts (110) speichert, zum Verwenden zum Vorhersagen, ob ein Herunterladen und Installation für ein anderes Gerät, mit der gleichen Plattform wie das zweite Kommunikationsgerät (110), möglich ist.

2. Verfahren nach Anspruch 1, wobei der Schritt es Anzeigens durchgeführt wird durch
Ändern des Aussehens eines Icons in einem Display in dem ersten Kommunikationsgerät (100).

3. Verfahren nach einem der Ansprüche 1 bis 2, wobei das erste Kommunikationsgerät (100) ein Display umfasst und wobei der Schritt des Anzeigens durchgeführt wird durch
Anzeigen von Zeichen, die sich von links nach rechts oder von rechts nach links in einem Display in dem ersten Kommunikationsgeräts (100) bewegen.

4. Verfahren nach einem der Ansprüche 1 bis 3, wobei die erlangte erste Information durch den Anwendungsserver (120) über einen Nachrichtenserver empfangen wird, welcher Nachrichtenserver mit dem Anwendungsserver (120) verbunden ist, um die erste Information von dem Anwendungsserver (120) zu dem ersten Kommunikationsgerät (100) weiterzuleiten.

5. Verfahren nach einem der Ansprüche 1 bis 4, die weiteren Schritte umfassend:
Aufbauen (401) einer Verbindung zwischen dem ersten Kommunikationsgerät (100) und dem Nachrichtenserver;
Assoziieren (402) der aufgebauten Verbindung zwischen dem ersten Kommunikationsgerät (100) und dem Nachrichtenserver mit einer Identität; und
wobei die Identität in einer Nachricht umfasst ist, die in dem Schritt des Sendens einer Nachricht zu einem zweiten Kommunikationsgerät (110) umfasst ist.

6. Verfahren nach einem der Ansprüche 1 bis 5, wobei eine zweite Information über den Typ des Geräts, das das zweite Kommunikationsgerät (110) ist, und/oder welche Anwendungsplattform in dem zweiten Kommunikationsgerät (110) verfügbar ist, um für die Anwendung verwendet zu werden, wenn sie in das zweite Kommunikationsgerät (110) heruntergeladen wird, empfangen wird durch den Anwendungsserver (120) in einer Herunterladen-Anfrage von dem zweiten Kommunikationsgerät (110), das Verfahren die weiteren Schritte umfassend:
Erlangen (404) einer dritten Information von dem Anwendungsserver (120), wobei die dritte Information mitteilt, dass das zweite Kommunikationsgerät (110) nicht für die Anwendung verwendet werden kann, wenn dies in dem Anwendungsserver (120) festgestellt wird, basierend auf der empfangenen zweiten Information, wobei die dritte Information umfasst ist in der ersten Information, und
wobei der Schritt des Anzeigens durchgeführt wird durch Anzeigen, dass das zweite Kommunikationsgerät (110) nicht für die Anwendung verwendet werden kann, wenn die dritte Information erlangt wird.

7. Verfahren nach einem der Ansprüche 1 bis 6, die weiteren Schritte umfassend:
Erlangen (404) einer vierten Information von dem Anwendungsserver (120), wobei die vierte Information mitteilt, dass das Herunterladen der Anwendung in das zweite Kommunikationsgerät (110) fehlgeschlagen ist, wenn keine Nachricht eines erfolgreichen Herunterladens von dem zweiten Kommunikationsgerät (110) zu dem Anwendungsserver (120) innerhalb einer vorbestimmten Zeitgrenze erlangt wird, wobei die vierte Information umfasst ist in der ersten Information; und
wobei der Schritt des Anzeigens durchgeführt wird durch Anzeigen, dass das Herunterladen der Anwendung in das zweite Kommunikationsgerät (110) fehlgeschlagen ist, wenn die vierte Information erlangt wird.

8. Verfahren in einem Anwendungsserver (120), wobei der Anwendungsserver (120) eine in ein zweites Kommunikationsgerät herunterzuladende Anwendung bereitstellt, das Verfahren die Schritte umfassend:
Empfangen (601) einer Anfrage zum Herunterladen der Anwendung von dem zweiten Kommunikationsgerät (110), wenn das zweite Kommunikationsgerät (110) eine Nachricht von einem ersten Kommunikationsgerät (100) empfangen hat, wobei die Nachricht einen Link zu dem Anwendungsserver (120) zum Herunterladen der Anwendung umfasst, und, wenn der Link in der Nachricht in dem zweiten Kommunikationsgerät (110) aktiviert ist;
Senden (602) einer ersten Information zu dem ersten Kommunikationsgerät (100), wenn die Anfrage zum Herunterladen empfangen wird, wobei die erste Information mitteilt, ob, oder ob nicht, das zweite Kommunikationsgerät (110) angefangen hat die Anwendung herunterzuladen,
**gekennzeichnet durch** die weiteren Schritte:
Umfassen (602), in der ersten Information, einer fünften Information zu dem ersten Kommunikationsgerät (100), wobei die fünfte Information mitteilt, dass das zweite Kommunikationsgerät (110) versucht hat die Anwendung zu installieren und eine Anzahl von Malen fehlgeschlagen ist, wenn der Anwendungsserver (120) eine Vielzahl von Anfragen zum Herunterladen von dem zweiten Kommunikationsgerät (110) empfangen hat, was ein erfolgloses Herunterladen der Anwendung anzeigt,
Speichern (602) der fünften Information zusammen mit dem Typ der Anwendungsplattform des zweiten Kommunikationsgeräts (110), zum Verwenden zum Vorhersagen, ob ein Herunterladen und Installieren für ein anderes Gerät, mit derselben Plattform wie das zweite Kommunikationsgerät (110), möglich ist.

9. Verfahren nach Anspruch 8, wobei der Schritt des Sendens der ersten Information durch die Schritte durchgeführt wird:
Senden der ersten Information zu dem Nachrichtenserver; und
Anfragen des Nachrichtenservers, die erste Information zu dem ersten Kommunikationsgerät (100) weiterzuleiten.

10. Verfahren nach einem der Ansprüche 8 bis 9, wobei eine Verbindung zwischen dem ersten Kommunikationsgerät (100) und dem Nachrichtenserver aufgebaut wird und assoziiert wird mit einer Identität, welche Identität in der Nachricht umfasst war, die durch das zweite Kommunikationsgerät (110) von dem ersten Kommunikationsgerät (100) empfangen wurde, die weiteren Schritte umfassend:
Empfangen (601) der Identität von dem zweiten Kommunikationsgerät (110);
Verwenden (602) der Identität, um den Nachrichtenserver zu identifizieren für den Schritt des Sendens der ersten Information zu einem Nachrichtenserver.

11. Verfahren nach einem der Ansprüche 8 bis 10, wobei die Anfrage zum Herunterladen der Anwendung eine zweite Information umfasst über den Typ des Geräts, das das zweite Kommunikationsgerät (110) ist, und/oder welche Anwendungsplattform in dem zweiten Kommunikationsgerät (110) verfügbar ist, um für die Anwendung verwendet zu werden, wenn sie heruntergeladen ist, das Verfahren die weiteren Schritte umfassend:
Abschätzen (602), ob das zweite Kommunikationsgerät (110) für die Anwendung verwendet werden kann oder nicht, basierend auf der zweiten Information; und
Umfassen (602), in der ersten Information, einer dritten Information zu dem ersten Kommunikationsgerät (100), wobei die dritte Information dem zweiten Kommunikationsgerät (110) mitteilt, dass es nicht für die Anwendung verwendet werden kann, wenn dies in dem Abschätzungsschritt abgeschätzt wurde.

12. Verfahren nach einem der Ansprüche 8 bis 11, die weiteren Schritte umfassend:
Umfassen (602), in der ersten Information, einer vierten Information zu dem ersten Kommunikationsgerät (100), wobei die vierte Information mitteilt, dass das Herunterladen der Anwendung in das zweite Kommunikationsgerät (110) fehlgeschlagen ist, wenn keine Nachricht des erfolgreichen Herunterladens von dem zweiten Kommunikationsgerät (110) in einer vorbestimmten Zeitgrenze erlangt wurde.

13. Verfahren nach einem der Ansprüche 8 bis 12, wobei der Anwendungsserver (120) in dem ersten Kommunikationsgerät (100) umfasst ist.

14. Anordnung (500) in einem ersten Kommunikationsgerät (100), wobei die erste Kommunikationsgerätanordnung (500) umfasst:
einen Übertrager (510), der eingerichtet ist, um eine Nachricht zu einem zweiten Kommunikationsgerät (110) zu senden, wobei die Nachricht einen Link zu einem Anwendungsserver (120) umfasst, von welchem eine Anwendung in das zweite Kommunikationsgerät (110) heruntergeladen werden kann;
eine Informationserlangungseinheit (520), die eingerichtet ist, um eine erste Information von dem Anwendungsserver (120) zu erlangen, ob, oder ob nicht, das zweite Kommunikationsgerät (110) den Link aktiviert hat, der in der Nachricht empfangen wurde, und begonnen hat die Anwendung herunterzuladen,
**dadurch gekennzeichnet, dass**
die erste Kommunikationsgerätanordnung (500) ferner den Anwendungsserver (120) umfasst,
die Informationserlangungseinheit (520) ferner eingerichtet ist, um eine fünfte Information zu erlangen, die in der ersten Information von dem Anwendungsserver (120) umfasst ist, wobei die fünfte Information mitteilt, dass das zweite Kommunikationsgerät (110) versucht hat die Anwendung zu installieren und eine Anzahl von Malen fehlgeschlagen ist, wenn der Anwendungsserver (120) eine Vielzahl von Anfragen zum Herunterladen von dem zweiten Kommunikationsgerät (110) empfangen hat, was ein erfolgloses Herunterladen der Anwendung anzeigt,
die erste Kommunikationsgerätanordnung (500) ferner eine Anzeigeeinheit (530) umfasst, die eingerichtet ist, um anzuzeigen, dass das zweite Kommunikationsgerät (110) versucht hat die Anwendung zu installieren und eine Anzahl von Malen fehlgeschlagen ist, wenn die fünfte Information durch die Informationerlangungseinheit (520) erlangt wird,
wobei der Anwendungsserver (120) ferner eine Datenbank umfasst, die eingerichtet ist, um die fünfte Information zusammen mit dem Typ der Anwendungsplattform des zweiten Kommunikationsgeräts (110) zu speichern, zum Verwenden zum Vorhersagen, ob ein Herunterladen und Installation für ein anderes Gerät, mit derselben Plattform wie das zweite Kommunikationsgerät (110), möglich ist.

15. Mobiltelefon, das die erste Kommunikationsgerätanordnung (500) nach Anspruch 14 umfasst.

16. Anordnung (700) in dem Anwendungsserver (120), welcher Anwendungsserver (120) eingerichtet ist, um eine in ein zweites Kommunikationsgerät herunterzuladende Anwendung bereitzustellen, wobei die Anwendungsserveranordnung (700) umfasst:
einen Empfänger (710), der eingerichtet ist, um eine Anfrage zum Herunterladen der Anwendung von dem zweiten Kommunikationsgerät (110) zu empfangen, wenn das zweite Kommunikationsgerät (110) eine Nachricht von einem ersten Kommunikationsgerät (100) empfangen hat, wobei die Nachricht einen Link zu dem Anwendungsserver (120) zum Herunterladen der Anwendung umfasst, und, wenn der Link in der Nachricht in dem zweiten Kommunikationsgerät (110) aktiviert ist;
Sendeeinheit (720), die eingerichtet ist, um eine erste Information zu dem ersten Kommunikationsgerät (100) zu senden, wenn die Anfrage zum Herunterladen empfangen wird, wobei die erste Information mitteilt, ob, oder ob nicht, das zweite Kommunikationsgerät (110) begonnen hat, die Anwendung herunterzuladen,
**dadurch gekennzeichnet, dass**
die Sendeeinheit (720) ferner eingerichtet ist, um eine fünfte Information, die in der ersten Information umfasst ist, zu dem ersten Kommunikationsgerät (100) zu senden, wobei die fünfte Information mitteilt, dass das zweite Kommunikationsgerät (110) versucht hat die Anwendung zu installieren und eine Anzahl von Malen fehlgeschlagen ist, wenn eine Vielzahl von Anfragen zum Herunterladen von dem zweiten Kommunikationsgerät (110) empfangen wird, was ein erfolgloses Herunterladen der Anwendung anzeigt,
wobei die Anwendungsserveranordnung (700) ferner eine Datenbank (740) umfasst, die eingerichtet ist, um die fünfte Information zusammen mit dem Typ der Anwendungsplattform des zweiten Kommunikationsgeräts (110) zu speichern, zum Verwenden zum Vorhersagen, ob ein Herunterladen und Installion für ein anderes Gerät, mit derselben Plattform wie das zweite Kommunikationsgerät (110), möglich ist.

17. Anwendungsserveranordnung (120) nach Anspruch 16, wobei der Anwendungsserver (120) in dem ersten Kommunikationsgerät (100) umfasst ist.

## Revendications

1. Procédé, dans un premier dispositif de communication (100), le procédé comprenant les étapes consistant à :
*envoyer* (403) un message à un deuxième dispositif de communication (110), le message comprenant un lien vers un serveur d'applications (120) duquel une application peut être téléchargée vers le deuxième dispositif de communication (110) ;
*obtenir* (404) du serveur d'applications (120) une première information selon laquelle le deuxième dispositif de communication (110) a ou non activé le lien reçu dans le message, et a commencé à télécharger l'application,
**caractérisé en ce que**
le premier dispositif de communication (100) comprend le serveur d'applications (120), et **en ce que** la première information comprend en outre une cinquième information signalant que le deuxième dispositif de communication (110) a cherché à installer l'application et a échoué un certain nombre de fois, lorsque le serveur d'applications (120) a reçu une pluralité de demandes de téléchargement en provenance du deuxième dispositif de communication (110), indiquant un échec du téléchargement de l'application ;
*indiquer* (405) que le deuxième dispositif de communication (110) a cherché à installer l'application et a échoué un certain nombre de fois lorsque la cinquième information est obtenue ;
le serveur d'applications (120) *stockant* la cinquième information en association avec le type de plateforme d'application du deuxième dispositif de communication (110) à utiliser pour prédire si un téléchargement et une installation sont possibles pour un autre dispositif ayant la même plateforme que le deuxième dispositif de communication (110).

2. Procédé selon la revendication 1, dans lequel l'étape d'indication est effectuée par le fait de :
*modifier* l'aspect d'une icône sur un afficheur du premier dispositif de communication (100).

3. Procédé selon l'une quelconque des revendications 1 et 2, dans lequel le premier dispositif de communication (100) comprend un afficheur, et dans lequel l'étape d'indication est effectuée par le fait :
d'*afficher* des signes se déplaçant de la gauche vers la droite ou de la droite vers la gauche sur un afficheur dans le premier dispositif de communication (100).

4. Procédé selon l'une quelconque des revendications 1 à 3, dans lequel la première information obtenue est reçue du serveur d'applications (120) par l'intermédiaire d'un serveur de messagerie, lequel serveur de messagerie est contacté par le serveur d'applications (120) pour réexpédier la première information du serveur d'applications (120) au premier dispositif de communication (100).

5. Procédé selon l'une quelconque des revendications 1 à 4, comprenant l'étape supplémentaire consistant à :
*établir* (401) une connexion entre le premier dispositif de communication (100) et le serveur de messagerie ;
*associer* (402) la connexion établie entre le premier dispositif de communication (100) et le serveur de messagerie à une identité ; et
l'identité étant contenue dans le message envoyé lors de l'étape d'envoi d'un message à un deuxième dispositif de communication (110).

6. Procédé selon l'une quelconque des revendications 1 à 5, dans lequel une deuxième information concernant le type de dispositif du dispositif de communication (110), et/ou la plateforme d'application qui est disponible sur le deuxième dispositif de communication (110) et devant être utilisée pour l'application lorsque celle-ci est téléchargée sur le deuxième dispositif de communication (110), est reçue par le serveur d'applications (120) dans une demande de téléchargement d'application provenant du deuxième dispositif de communication (110), le procédé comprenant en outre l'étape consistant à :
*obtenir* (404) une troisième information du serveur d'applications (120), ladite troisième information signalant que le deuxième dispositif de communication (110) ne peut pas être utilisé pour l'application lorsque cela a été estimé sur le serveur d'applications (120) sur la base de la deuxième information reçue, la troisième information étant contenue dans la première information, et
dans lequel l'étape d'indication est effectuée en *indiquant* que le deuxième dispositif de communication (110) ne peut pas être utilisé pour l'application lorsque la troisième information est obtenue.

7. Procédé selon l'une quelconque des revendications 1 à 6, comprenant l'étape supplémentaire consistant à :
*obtenir* (404) une quatrième information en provenance du serveur d'applications (120), ladite quatrième information signalant que le téléchargement de l'application sur le deuxième dispositif de communication (110) a échoué si aucun message de réussite du téléchargement n'a été envoyé du deuxième dispositif de communication (110) au serveur d'applications (120) avant une limite de temps prédéterminée, la quatrième information étant contenue dans la première information ; et
dans lequel l'étape d'indication est effectuée en *indiquant* que le téléchargement de l'application sur le deuxième dispositif de communication (110) a échoué lorsque la quatrième information est obtenue.

8. Procédé sur un serveur d'applications (120), lequel serveur d'applications (120) fournit une application devant être téléchargée sur le deuxième dispositif de communication, le procédé comprenant les étapes consistant à :
*recevoir* (601) une demande de téléchargement de l'application en provenance du deuxième dispositif de communication (110) lorsque le deuxième dispositif de communication (110) a reçu un message d'un premier dispositif de communication (100), le message comprenant un lien vers le serveur d'application (120) pour télécharger l'application, et lorsque le lien contenu dans le message est activé dans le deuxième dispositif de communication (110) ;
*envoyer* (602) une première information au premier dispositif de communication (100) lorsque la demande de téléchargement est reçue, ladite première information signalant si le deuxième dispositif de communication (110) a ou non commencé à télécharger l'application,
**caractérisé par** les étapes supplémentaires consistant à :
*inclure* (602) dans la première information une cinquième information destinée au premier dispositif de communication (100), ladite cinquième information signalant que le deuxième dispositif de communication (110) a cherché à installer l'application et a échoué un certain nombre de fois, lorsque le serveur d'applications (120) a reçu une pluralité de demandes de téléchargement en provenance du deuxième dispositif de communication (110), indiquant un échec du téléchargement de l'application,
*stocker* (602) la cinquième information en association avec le type de plateforme d'application du deuxième dispositif de communication (110) à utiliser pour prédire si un téléchargement et une installation sont possibles pour un autre dispositif ayant la même plateforme que le deuxième dispositif de communication (110).

9. Procédé selon la revendication 8, dans lequel l'étape d'envoi de la première information est effectuée par les étapes consistant à :
*envoyer* la première information à un serveur de messagerie ; et
*demander* au serveur de messagerie de réexpédier la première information au premier dispositif de communication (100).

10. Procédé selon l'une quelconque des revendications 8 et 9, dans lequel une connexion entre le premier dispositif de communication (100) et le serveur de messagerie est établie et associée à une identité, laquelle identité était contenue dans le message reçu par le deuxième dispositif de communication (110) en provenance du premier dispositif de communication (100), comprenant les étapes supplémentaires consistant à :
*recevoir* (601) l'identité en provenance du deuxième dispositif de communication (110) ;
*utiliser* (602) l'identité pour identifier le serveur de messagerie pour l'étape d'envoi de la première information à un serveur de messagerie.

11. Procédé selon l'une quelconque des revendications 8 à 10, dans lequel la demande de téléchargement de l'application comprend une deuxième information concernant le type de dispositif du deuxième dispositif de communication (110) et/ou quelle plateforme d'application est disponible sur le deuxième dispositif de communication (110), à utiliser pour l'application lorsqu'elle est téléchargée, le procédé comprenant l'étape supplémentaire consistant à :
*estimer* (602) si le deuxième dispositif de communication (110) peut ou non être utilisé pour l'application sur la base de la deuxième information ; et
*inclure* (602) dans la première information une troisième information destinée au premier dispositif de communication (100), ladite troisième information signalant que le deuxième dispositif de communication (110) ne peut pas être utilisé pour l'application si cela a été estimé lors de l'étape d'estimation.

12. Procédé selon l'une quelconque des revendications 8 à 11, comprenant l'étape supplémentaire consistant à :
*inclure* (602) dans la première information une quatrième information destinée au premier dispositif de communication (100), ladite quatrième information signalant que le téléchargement de l'application sur le deuxième dispositif de communication (110) a échoué si aucun message de réussite du téléchargement n'a été obtenu du deuxième dispositif de communication (110) avant une limite de temps prédéterminée.

13. Procédé selon l'une quelconque des revendications 8 à 12, dans lequel le serveur d'applications (120) est contenu dans le premier dispositif de communication (100).

14. Agencement (500), dans un premier dispositif de communication (100), l'agencement (500) du premier dispositif de communication comprenant :
un émetteur (510) apte à envoyer un message à un deuxième dispositif de communication (110), le message comprenant un lien vers un serveur d'applications (120) duquel une application peut être téléchargée sur le deuxième dispositif de communication (110) ;
une unité d'obtention d'information (520) apte à obtenir une première information en provenance du serveur d'applications (120) indiquant si oui ou non le deuxième dispositif de communication (110) a activé le lien reçu dans le message et a commencé à télécharger l'application,
l'agencement (500) du premier dispositif de communication étant **caractérisé en ce qu'**il comprend le serveur d'applications (120), et **en ce que**
l'unité d'obtention d'information (520) est en outre apte à obtenir une cinquième information contenue dans la première information en provenance du serveur d'applications (120), ladite cinquième information signalant que le deuxième dispositif de communication (110) a cherché à installer l'application et a échoué un certain nombre de fois, lorsque le serveur d'applications (120) a reçu une pluralité de demandes de téléchargement en provenance du deuxième dispositif de communication (110), indiquant un échec du téléchargement de l'application,
l'agencement (500) du premier dispositif de communication comprenant en outre une unité d'indication (530) apte à indiquer que le deuxième dispositif de communication (110) a cherché à installer l'application et a échoué un certain nombre de fois lorsque la cinquième information est obtenue par l'unité d'obtention d'information (520),
dans lequel le serveur d'applications (120) comprend en outre une base de données apte à stocker la cinquième information en association avec le type de plateforme d'application du deuxième dispositif de communication (110) à utiliser pour prédire si un téléchargement et une installation sont possibles pour un autre dispositif ayant la même plateforme que le deuxième dispositif de communication (110).

15. Téléphone mobile comprenant l'agencement (500) du premier dispositif de communication selon la revendication 14.

16. Agencement (700) sur un serveur d'applications (120), lequel serveur d'applications (120) est apte à fournir une application devant être téléchargée sur un deuxième dispositif de communication, l'agencement (700) du serveur d'application comprenant :
un récepteur (710) apte à recevoir une demande de téléchargement de l'application en provenance du deuxième dispositif de communication (110) lorsque le deuxième dispositif de communication (110) a reçu un message en provenance d'un premier dispositif de communication (100), le message comprenant un lien vers le serveur d'applications (120) pour télécharger l'application, et lorsque le lien contenu dans le message est activé sur le deuxième dispositif de communication (110) ;
une unité d'envoi (720) apte à envoyer une première information au premier dispositif de communication (100) lorsque la demande de téléchargement est reçue, ladite première information indiquant si oui ou non le deuxième dispositif de communication (110) a commencé à télécharger l'application,
**caractérisé en ce que**
l'unité d'envoi (720) est en outre apte à envoyer une cinquième information contenue dans la première information au premier dispositif de communication (100), ladite cinquième information signalant que le deuxième dispositif de communication (110) a cherché à installer l'application et a échoué un certain nombre de fois lorsqu'une pluralité de demandes de téléchargement sont reçues du deuxième dispositif de communication (110), indiquant un échec du téléchargement de l'application,
l'agencement (700) du serveur d'applications comprenant en outre une base de données (740) apte à stocker la cinquième information en association avec le type de plateforme d'application du deuxième dispositif de communication (110) à utiliser pour prédire si un téléchargement et une installation sont possibles pour un autre dispositif ayant la même plateforme que le deuxième dispositif de communication (110).

17. Agencement d'un serveur d'applications (120) selon la revendication 16, dans lequel le serveur d'applications (120) est contenu dans le premier dispositif de communication (100).
